# EUROPEAN PATENT APPLICATION

(11) **EP 0 972 578 A2**
(43) Date of publication of application: **19.01.2000**
(21) Application number: 99304796.8
(22) Date of filing: 18.06.1999
(51) Int. Cl.: B09B 3/00

(54) **Method for reusing ceramic parts**

(30) Priority: 17.07.1998 JP 20248498
(71) Applicant: Sumitomo Electric Industries, Ltd., Osaka-shi, Osaka 541-0041 (JP)
(72) Inventor: Yamakawa, Akira, c/o Itami Works, Itami-shi, Hyogo (JP)
(74) Representative: Cross, Rupert Edward Blount

(57) **Abstract**

Reuse of used ceramic parts that have typically been disposed of as wastes reduces the costs of ceramic parts and lessens industrial wastes. First, used ceramic parts are detached from machines such as automobile engines that have ended their lives and are destined to be disposed of. Second, used ceramic parts are selected that have cracks not more than 0.1 mm in length. Finally, the selected used ceramic parts are mounted onto new machines of the same type as before, as they are or after reshaped. An alternative selection method is to perform a bending test on at least one sample from a group of detached used ceramic parts. When the test result shows a bending-strength reduction of 50% or less, the remaining used ceramic parts in the group are judged reusable.

## Description

The invention relates to a method for reusing ceramic parts incorporated in machines including automobiles, electric equipment, and electronics.

Superior in mechanical properties, corrosion resistance, wear resistance, and resistance to oxidation; alumina, silicon nitride, silicon carbide, and other ceramics have been widely used as the material for parts of not only cutting tools but also automobile engines, electric equipment, and electronics.

Particularly, those having most superior mechanical properties and reliability given through strict control in fabricating processes have been used in heavy-duty application such as automobile engines and gas turbines. In the field of electric equipment, electronics, and OA apparatus also, ceramics have been extending their range of application exploiting their superior electric-insulation properties and dielectric properties along with their superior mechanical properties.

However, ceramics have limitations in extending their range of application because in comparison with metal, plastics, or other materials, they are particularly high in material cost, complicated in fabricating process, high in energy cost due to a high sintering temperature, poor in processibility due to high hardness, and brittle and susceptible to damage during operation.

As with those used in automobile engines, most of the ceramic parts incorporated into the foregoing machines have been disposed of together with or after detaching from the machines when the machines end their lives.

Used ceramics have been sent to a sanitary landfill or disposed of as industrial wastes, causing a problem of environmental pollution. In the case of parts where ceramics are bonded with metal, ceramic parts are deemed as a troublesome admixture which hinders the recovery of metal part.

In view of the fact that most of the ceramic parts incorporated into machines are disposed of when the machines end their lives and cause environmental problems, it is desired that ceramic parts be reused effectively. To enlarge the sphere of application also, effective recycling of ceramics should be pushed forward so that the total cost is reduced in exploiting the resource efficiently.

From the consideration of the above-mentioned circumstances, an object of the invention is to reuse ceramic parts that have typically been disposed of as wastes, so that the ceramic parts are reduced in cost and industrial wastes are lessened to preserve the environment of the planet.

In order to achieve the above object, the invention offers a method for reusing ceramic parts by the following process: First, used ceramic parts are detached from machines that have ended their lives. Second, selection is performed to find out used ceramic parts that have cracks not more than 0.1 mm in length. Finally, the selected used ceramic parts are mounted onto new machines of the same type as that of the machines from which the used ceramic parts were detached.

The invention offers another method for reusing ceramic parts by the following process: First, used ceramic parts are detached from a machine that has ended its life. Second, a bending test is carried out on at least one sample from a group of used ceramic parts. Finally, when the test result shows a bending-strength reduction of 50% or less in comparison with the initial strength, the remaining used ceramic parts in the group are mounted onto new machines of the same type as that of the machine from which the used ceramic parts were detached.

The invention offers a machine that mounts a used ceramic part or used ceramic parts. In this case, the machine is the same type as that of the machine that ended its life and from which the used ceramic part or parts were detached, and the length of cracks existing in the used ceramic part or parts is not more than 0.1 mm.

The invention offers a reusable ceramic part that is selected from a group of used ceramic parts detached from machines that have ended their lives, that has cracks not more than 0.1 mm in length, and that is to be mounted onto a new machine of the same type as that of the machine from which the used ceramic part was detached.

The inventor detached used ceramic parts from machines including automobiles that were judged to have ended their lives to examine the performance and reusability of the detached ceramic parts. The examination revealed that used ceramic parts having cracks not more than 0.1 mm in length can be used again without fracture, when they are mounted onto new machines of the same type as before, over a given period of time until the new machines end their lives.

More specifically, during the operation of ceramic parts incorporated into machines, mechanical stresses develop cracks or cause incipient cracks that were produced before the use to grow. If the cracks are 0.1 mm or less in length, the ceramic parts can be used again. If, however, the cracks exceed 0.1 mm in length, the ceramic parts often fracture during the reuse period, reducing the reliability exceedingly.

Remarkable thing is that whereas new ceramic parts having cracks about 0.1 mm in length fracture during operation in many instances, used ceramic parts having cracks of the same extent do not fracture during operation on condition that the length of the cracks remains 0.1 mm or less. Although yet to be proved, one of the reasons is considered attributable to that actual use of ceramic parts improves the compatibility with the mating parts.

It is also found that used ceramic parts detached from machines that have ended their lives can be used again when the bending-strength reduction is 50% or less in comparison with the initial strength at the first use. However, since the bending test is a destructive test, at least one sample from a group of used ceramic parts detached from the same machine is subjected to the test. The remaining used ceramic parts in the group can be judged to have the same degree of bending-strength reduction as the sample, so that they are to be used again on new machines of the same type on condition that the sample shows the bending-strength reduction of 50% or less.

Cracks of used ceramic parts can be inspected by the fluorescent flaw detection, X-ray inspection including the microfocus X-ray method, ultrasonic flaw detection, or other known methods. The bending test is performed in accordance with the Japanese Industrial Standard JIS R 1601.

Used ceramic parts judged by the above-mentioned inspection or test method to have the crack length or bending-strength reduction within the foregoing range of the invention are reusable ceramic parts to be mounted on new machines of the same type. Subsequently, these reusable ceramic parts are mounted on new machines of the same type, and such machines are supplied as those that have reused ceramic parts. If a machine to mount used ceramic parts is partly different from the machine which the ceramic parts were detached from due to a change in design, for example, the used ceramic parts can be reshaped so that they can fit into the new machine.

It is desirable that the ceramic part to which the invention is applied employ high-strength ceramic materials, specifically ceramics mainly consisting of silicon nitride, silicon carbide, alumina, or zirconia, preferably silicon nitride or zirconia, which has high fracture toughness. The ceramic part may either be a single ceramic body or be a bonded body of ceramic and metal. Particularly, the ceramic part bonded with metal improves the reliability.

### EXAMPLE 1

Adjusting shims, 27 mm in diameter and 4 mm in thickness, used for the valve train in automobile engines were fabricated using ceramic materials shown in Table 1 below. All 16 adjusting shims were incorporated into a 2000-cc DOHC engine to be mounted onto an automobile.

Two automobiles mounting the foregoing engine were subjected to a running test. As for one automobile, all adjusting shims were detached after a 200,000-km running to measure the bending strength. As for the other automobile, all adjusting shims were detached after a 200,000-km running to measure crack lengths; all as-measured adjusting shims were then incorporated into a new engine to carry out another 200,000-km running test.

During the second running test, the engine was stopped at proper intervals to examine individual adjusting shims with respect to the degree of fracture. Fractured adjusting shims were replaced with steel adjusting shims to continue the test.

Table 1 below shows the length and location of cracks in the adjusting shims found before and after the first 200,000-km running test, the bending strength measured before and after the test, and the status of fracture of adjusting shims during and after the second 200,000-km running test that was carried out reusing individual adjusting shims.

**Table 1**

| Sample | Material | Cracks | | | | Bending strength | | | Status of fracture |
|---|---|---|---|---|---|---|---|---|---|
| | | Before use | | After use | | Before use | After use | Stren gth reduction | Reuse result |
| | | Length(m m) | Location | Length(m m) | Location | (MPa) | (MPa) | (%) | |
| 1* | Si₃N₄ | <0.1 | Surface | 0.2 | Surface | 600 | 250 | 58 | Fracture at 140 km |
| 2 | Si₃N₄ | <0.1 | Surface | <0.1 | Surface | 600 | 550 | 8 | Good after 200,000km |
| 3 | Si₃N₄ | <0.1 | Surface | <0.1 | Surface | 1000 | 1000 | 0 | Good after 200,000km |
| 4 | Si₃N₄ | <0.1 | Surface | <0.1 | Surface | 1000 | 600 | 40 | Good after 200,000km |
| 5* | Si₃N₄ | <0.1 | Surface | <0.1 | Surface | 1000 | 400 | 60 | Fracture at 15,000 km |
| 6* | Si₃N₄ | <0.1 | Surface | 0.2 | Surface | 500 | 300 | 40 | Fracture at 50,000 km |
| 7 | Si₃N₄ | <0.1 | Inside | <0.1 | Inside | 1000 | 800 | 20 | Good after 200,000km |
| 8* | Si₃N₄ | Absence | | <0.1 | Inside | 1200 | 550 | 54 | Fracture at 10,000 |
| 9 | Si₃N₄ | <0.1 | Surface | <0.1 | Surface | 800 | 700 | 12 | Good after 200,000km |
| 10 | Si₃N₄ | <0.1 | Surface | <0.1 | Surface | 1500 | 1400 | 7 | Good after 200,000km |
| 11 | Al₂O₃ | <0.1 | Surface | <0.1 | Surface | 700 | 600 | 14 | Good after 200,000km |
| 12 | SiC | <0.1 | Surface | <0.1 | Surface | 800 | 650 | 19 | Good after 200,000km |
| 13 | ZrO2 | <0.1 | Surface | <0.1 | Surface | 1600 | 1400 | 12 | Good after 200,000km |
| 14 | Si₃N/steel | <0.1 | Surface | <0.1 | Surface | Sample undetachable | | - | Good after 200,000km |
| 15 | Si₃N/steel | <0.1 | Surface | <0.1 | Surface | Sample undetachable | | - | Good after 200,000km |
| 16 | Al₂O₃/ ZrO₂ | <0.1 | Surface | <0.1 | Surface | Sample undetachable | | - | Good after 200,000km |

| | | | | | | | | | |
|---|---|---|---|---|---|---|---|---|---|
| *: comparative sample. Samples 14 to 16 are adjusting shims having a bonded structure of ceramic and steel or ceramic and ceramic. | | | | | | | | | |

The results proved that when the length of cracks either newly produced or grown from an incipient state in the used ceramic parts exceeds 0.1 mm or the bending-strength reduction of the used ceramic parts exceeds 50%, the reuse by mounting the used ceramic parts onto a new machine causes early fracture.

### EXAMPLE 2

The same silicon nitride materials as those used for samples 1 and 7 in Example 1 were used to fabricate adjusting shims and exhaust valves, which were then mounted on the same type of engine as Example 1 to carry out a running test by an automobile. After the 200,000-km running test, it was confirmed that both the adjusting shims and exhaust valves were free from cracks exceeding 0.1 mm in length. Subsequently, the adjusting shims were ground to remove about 50-µm thick layers from the both surfaces and mounted again on a new engine of the same type. The exhaust valves were mounted again as they were.

An automobile equipped with the new engine that mounts the foregoing used adjusting shims and exhaust valves successfully completed another 200,000-km running test without the fracture of the adjusting shims and exhaust valves.

## Claims

1. A method for reusing ceramic parts, comprising:
detaching used ceramic parts from machines that have ended their lives; selecting used ceramic parts that have cracks not more than 0.1 mm in length; and
mounting the selected used ceramic parts onto new machines of the same type as that of the machines from which the used ceramic parts were detached.

2. A method for reusing ceramic parts, comprising:
detaching used ceramic parts from a machine that has ended its life; carrying out a bending test on at least one sample from a group of used ceramic parts;
confirming that the test result shows a bending-strength reduction of 50% or less in comparison with the initial strength; and
mounting the remaining used ceramic parts in the group onto new machines of the same type as that of the machine from which the used ceramic parts were detached.

3. A method for reusing ceramic parts as defined in claim 1 or 2, wherein the used ceramic parts are reshaped before mounting onto new machines.

4. A method for reusing ceramic parts as defined in claim 1, 2, or 3, wherein the used ceramic parts are bonded with metal.

5. A machine that mounts a used ceramic part or used ceramic parts specified as:
being the same type as that of the machine that ended its life and from which the used ceramic part or parts were detached; and
mounting the used ceramic part or parts having cracks not more than 0.1 mm in length.

6. A reusable ceramic part specified as:
being selected from a group of used ceramic parts detached from machines that have ended their lives;
having cracks not more than 0.1 mm in length; and
being to be mounted onto a new machine of the same type as that of the machine from which the used ceramic part was detached.
